# FASCICULE DE BREVET EUROPEEN

(11) **EP 3 953 238 B1**
(45) Date de publication et mention de la délivrance du brevet: **01.03.2023**
(21) Numéro de dépôt: 20725779.1
(22) Date de dépôt: 08.04.2020
(51) Int. Cl.: B62D 25/02, B62D 25/08, B62D 65/02, B62D 65/14, B60R 22/18, B60R 22/24, B60N 2/36

(54) **PROCÉDÉ D'ASSEMBLAGE DE PARTIES STRUCTURELLES SUPÉRIEURE ET INFÉRIEURE À PIÈCES DE RENFORT, D'UN VÉHICULE AUTOMOBILE**
VERFAHREN ZUR BEFESTIGUNG VON UNTEREN UND OBEREN STRUKTURTEILEN MIT VERSTÄRKUNGSTEILEN EINES FAHRZEUGES.
METHOD OF ASSEMBLY OF LOWER AND UPPER STRUCTURE PARTS WITH REINFORCEMENT PART OF A VEHICLE

(30) Priorité: 08.04.2019 FR 1903732
(43) Date de publication de la demande: 16.02.2022
(73) Titulaire: PSA Automobiles SA, 78300 Poissy (FR)
(72) Inventeur: PROST, Fabien, 25200 MONTBELIARD (FR); LEFEVRE, Eric, 91470 LIMOURS (FR); DRAPT, Christophe, 90000 BELFORT (FR); ALPY, Eric, 25460 ETUPES (FR)
(86) Numéro de dépôt international: PCT/FR2020/000096
(87) Numéro de publication internationale: WO 2020/208312

(56) Documents cités:
- WO-A1-2012/101339
- CN-A- 104 228 958
- FR-A1- 2 922 179
- FR-A1- 2 924 674
- JP-B2- 3 457 510

## Description

### Domaine technique de l'invention

La présente invention revendique la priorité de la demande française 1903732 déposée le 08 Avril 2019.

L'invention concerne l'assemblage des parties structurelles inférieure et supérieure de véhicules automobiles.

### Etat de la technique

Comme le sait l'homme de l'art, la fabrication de nombreux véhicules automobiles nécessite la mise en oeuvre d'un procédé d'assemblage pour assembler entre elles des parties structurelles inférieure et supérieure destinées à définir leur structure (ou caisse).

Dans certains véhicules automobiles la partie structurelle inférieure (parfois appelée soubassement) comprend deux premières parois latérales arrière qui se font face, définissent respectivement deux passages de roue et sur des faces internes desquelles sont solidarisés fixement deux éléments latéraux de renfort comprenant chacun une extrémité libre, et la partie structurelle supérieure (parfois appelée superstructure) comprend deux secondes parois latérales arrière se faisant face et solidarisées fixement et respectivement aux parties supérieures des premières parois latérales arrière.

Par exemple, le document JP345751 0 divulgue un procédé d'assemblage de parties structurelles supérieure et inférieure d'un véhicule automobile.

Lors de l'assemblage des parties structurelles inférieure et supérieure on solidarise fixement par soudage les premières parois latérales arrière aux secondes parois latérales arrière associées. Puis, on solidarise fixement, à l'extrémité libre de chaque élément latéral de renfort et à chaque seconde paroi latérale arrière associée, une pièce de renfort dédiée à l'ancrage d'une gâche de verrouillage du dossier du siège arrière et destinée à réduire l'amplitude des torsions de la structure. Cette dernière solidarisation fixe est réalisée sur chaque côté latéral de la structure par au moins un technicien par vissage de plusieurs vis (typiquement six). Ces vissages s'avèrent assez contraignants à réaliser par chaque technicien en raison de la mauvaise ergonomie. En outre, ces vissages sont chronophages et donc onéreux.

Ensuite, on doit solidariser sur la face interne de chaque seconde paroi latérale arrière une pièce de renfort dédiée à l'ancrage d'une pièce de renvoi d'une ceinture de sécurité. Cette dernière solidarisation, qui est aussi réalisée par au moins un technicien, s'avère également assez contraignante en raison de la mauvaise ergonomie et augmente encore la durée de la phase d'assemblage.

L'invention a donc notamment pour but d'améliorer la situation.

### Présentation de l'invention

Elle propose notamment à cet effet un procédé destiné à permettre l'assemblage de parties structurelles inférieure et supérieure d'un véhicule automobile, la partie structurelle inférieure comprenant deux premières parois latérales arrière se faisant face, définissant respectivement deux passages de roue et sur des faces internes desquelles sont solidarisés fixement deux éléments latéraux de renfort comprenant chacun une extrémité libre, et la partie structurelle supérieure comprenant deux secondes parois latérales arrière se faisant face destinées à être solidarisées fixement et respectivement à des parties supérieures des premières parois latérales arrière.

Ce procédé d'assemblage se caractérise par le fait qu'il comprend :
- une première étape dans laquelle on solidarise fixement à l'extrémité libre de chaque élément latéral de renfort une première pièce dédiée à l'ancrage d'une gâche de verrouillage d'un dossier de siège arrière, et à une face interne de chacune des secondes parois latérales arrière une seconde pièce dédiée à l'ancrage d'une pièce de renvoi d'une ceinture de sécurité, et
- une seconde étape dans laquelle on assemble les parties structurelles inférieure et supérieure en solidarisant fixement par soudage les premières pièces aux secondes pièces et les premières parois latérales arrière aux secondes parois latérales arrière.

La structure du véhicule comprend ainsi sur chacun de ses deux côtés latéraux une pièce de renfort double, résultant de la solidarisation fixe des première et seconde pièces, et assurant l'ancrage d'une gâche et d'une pièce de renvoi.

Le procédé d'assemblage selon l'invention peut comporter d'autres caractéristiques qui peuvent être prises séparément ou en combinaison, et notamment :
- on peut utiliser deux paires de première et seconde pièces inclinées dans une même direction par rapport à une direction verticale du véhicule automobile et espacées l'une de l'autre. Dans ce cas, dans la seconde étape on peut plaquer la première pièce de chaque paire contre la seconde pièce de cette même paire avant de procéder à leur solidarisation fixe ;
- dans la seconde étape on peut réaliser le plaquage avec des pinces de soudure avant de procéder à la solidarisation fixe par soudage ;
- dans la seconde étape après l'assemblage chaque première pièce peut recouvrir presque intégralement la seconde pièce associée ;
- dans la première étape on peut solidariser fixement à chaque première pièce une gâche qui est destinée au verrouillage d'un dossier de siège arrière ;
- dans la première étape on peut solidariser fixement par vissage ou soudage chaque gâche à chaque première pièce ;
- dans ladite première étape on peut solidariser fixement à chaque seconde pièce une pièce de renvoi d'une ceinture de sécurité ;
- dans la première étape on peut solidariser fixement par vissage ou soudage chaque pièce de renvoi à chaque seconde pièce associée.

L'invention propose également un véhicule automobile comprenant une structure délimitant un habitacle dans lequel est installé au moins un siège arrière et comportant des parties structurelles inférieure et supérieure assemblées entre elles par la mise en oeuvre d'un procédé d'assemblage du type de celui présenté ci-avant.

### Brève description des figures

D'autres caractéristiques et avantages de l'invention apparaîtront à l'examen de la description détaillée ci-après, et des dessins annexés, sur lesquels :
[Fig. 1] illustre schématiquement, dans une vue en perspective, une petite partie d'un exemple de partie structurelle inférieure d'une structure de véhicule automobile selon l'invention,
[Fig. 2] illustre schématiquement, dans une vue en perspective, une petite partie d'un exemple de partie structurelle supérieure destinée à être assemblée à la partie structurelle inférieure de la figure 1,
[Fig. 3] illustre schématiquement, dans une vue en perspective, les parties structurelles inférieure et supérieure des figures 1 et 2 une fois assemblées par la mise en oeuvre d'un procédé d'assemblage selon l'invention, et
[Fig. 4] illustre schématiquement un exemple d'algorithme mettant en oeuvre un procédé d'assemblage selon l'invention.

### Description détaillée de l'invention

L'invention a notamment pour but de proposer un procédé destiné à permettre l'assemblage de parties structurelles inférieure PSI et supérieure PSS d'un véhicule automobile, à première P1 et seconde P2 pièces de renfort.

Dans ce qui suit, on considère, à titre d'exemple non limitatif, que le véhicule automobile est une berline. Mais l'invention n'est pas limitée à ce type de véhicule automobile. En effet, elle concerne tout véhicule automobile comprenant une structure délimitant un habitacle dans lequel est installé au moins un siège arrière et comportant des parties structurelles inférieure et supérieure devant être assemblées entre elles. Ainsi, l'invention concerne aussi les véhicules monospaces, les véhicules métis (ou « crossover ») et les véhicules de loisir bicorps (ou SUV (« Sport Utility Vehicle »)), par exemple.

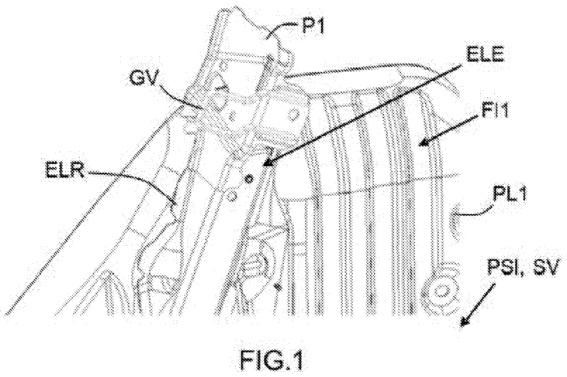

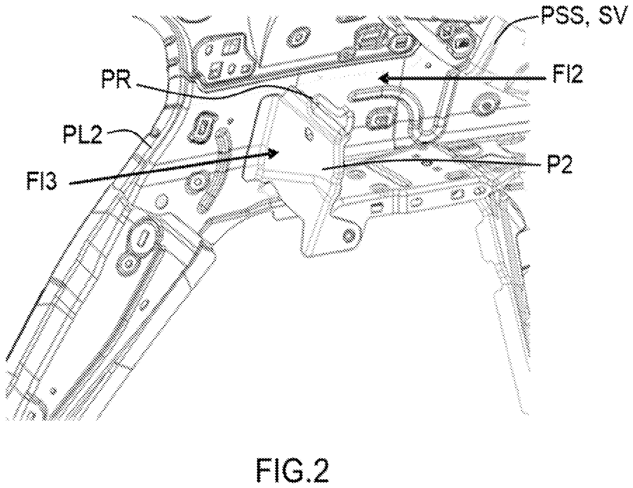

On a schématiquement représenté sur les figures 1 et 2 respectivement des exemples de réalisation de portions de parties structurelles inférieure PSI et supérieure PSS devant être assemblées entre elles afin de faire partie d'une structure (ou caisse) d'un véhicule automobile. Plus précisément, sur la figure 1 se trouve représentée une portion arrière droite d'une partie structurelle inférieure (ou soubassement) PSI, et sur la figure 2 se trouve représentée une portion arrière droite d'une partie structurelle supérieure (ou superstructure) PSS.

Comme illustré partiellement sur la figure 1, la partie structurelle inférieure PSI comprend deux premières parois latérales arrière PL1 se faisant face sur deux côtés latéraux du futur véhicule (automobile) et définissant respectivement deux passages de roue. On notera que seule la première paroi latérale arrière droite PL1 est ici représentée.

Chaque première paroi latérale arrière PL1 est de préférence réalisée en tôle (par exemple en acier ou en aluminium), et comprend une face interne FI1, orientée vers l'intérieur de l'habitacle, et sur laquelle est solidarisé fixement un élément latéral de renfort ELR comprenant une extrémité libre ELE. Cette solidarisation fixe est préférentiellement réalisée par soudage.

Comme illustré partiellement sur la figure 2, la partie structurelle supérieure PSS comprend deux secondes parois latérales arrière PL2 se faisant face sur les deux côtés latéraux du futur véhicule (automobile) et destinées à être solidarisées fixement et respectivement à des parties supérieures des deux premières parois latérales arrière PL1. On notera que seule la seconde paroi latérale arrière droite PL2 est ici représentée. On notera également que chaque seconde paroi latérale arrière PL2 (droite ou gauche) peut être ce que l'homme de l'art appelle parfois une custode (ou un panneau latéral) ou une doublure d'aile arrière.

Chaque seconde paroi latérale arrière PL2 est de préférence réalisée en tôle (par exemple en acier ou en aluminium), et comprend une face interne FI2, orientée vers l'intérieur de l'habitacle.

L'assemblage des parties structurelles inférieure PSI et supérieure PSS se fait par la mise en oeuvre d'un procédé d'assemblage selon l'invention, qui comprend des première 10-20 et seconde 30-40 étapes.

Dans la première étape 10-20, on solidarise fixement à l'extrémité libre ELE de chaque élément latéral de renfort ELR une première pièce P1 qui est dédiée à l'ancrage d'une gâche GV de verrouillage d'un dossier de siège arrière destiné à être installé entre les deux côtés latéraux de la structure du véhicule. Chaque première pièce P1 constitue alors une pièce de renfort pour l'ancrage de la partie supérieure du dossier. De plus, on solidarise aussi fixement à la face interne FI2 de chacune des secondes parois latérales arrière PL2 une seconde pièce P2 qui est dédiée à l'ancrage d'une pièce de renvoi PR d'une ceinture de sécurité. Chaque seconde pièce P2 constitue alors une pièce de renfort pour l'ancrage de la pièce de renvoi PR associée.

Ces solidarisations fixes des première P1 et seconde P2 pièces respectivement à une extrémité libre ELE et à une seconde paroi latérale arrière PL2 se font préférentiellement par soudage, ce qui nécessite que les première P1 et seconde P2 pièces soient réalisées en métal (par exemple en acier ou en aluminium).

On notera que dans la première étape 10-20 on peut solidariser fixement à chaque première pièce P1 une gâche GV destinée au verrouillage d'un dossier de siège arrière. Cette solidarisation peut se faire avant ou après la solidarisation d'une première pièce P1 à l'extrémité libre ELE correspondante. De préférence, dans la première étape 10-20 on peut solidariser fixement par soudage chaque gâche GV à chaque première pièce P1 correspondante.

On notera également que dans la première étape 10-20 on peut solidariser fixement à chaque seconde pièce P2 une pièce de renvoi PR d'une ceinture de sécurité. Cette solidarisation peut se faire avant ou après la solidarisation d'une seconde pièce P2 à la seconde paroi latérale arrière PL2 correspondante.

De préférence, dans la première étape 10-20 on peut solidariser fixement par soudage chaque pièce de renvoi PR à chaque seconde pièce P2 associée (ou correspondante).

Dans la seconde étape 30-40 du procédé d'assemblage, on assemble les parties structurelles inférieure PSI et supérieure PSS en solidarisant fixement par soudage leurs premières pièces P1 à leur secondes pièces P2 correspondantes et leurs premières parois latérales arrière PL1 à leurs secondes parois latérales arrière PL2 correspondantes.

Ainsi, la structure du véhicule comprend très avantageusement sur chacun de ses deux côtés latéraux une pièce de renfort double, résultant de la solidarisation fixe des première P1 et seconde P2 pièces, et assurant à la fois l'ancrage d'une gâche GV et l'ancrage d'une pièce de renvoi PR. De plus, ces solidarisations fixes étant réalisées par soudage, elles peuvent avantageusement être réalisées par au moins un robot programmé, ce qui permet d'éviter au moins en partie l'intervention d'un ou deux techniciens.

On notera que l'on peut utiliser deux paires de première P1 et seconde P2 pièces qui sont inclinées dans une même direction par rapport à la direction verticale du véhicule et espacées l'une de l'autre. Cet espacement est un jeu tenant compte des dispersions dimensionnelles et du rapprochement (ou accostage) des parties structurelles inférieure PSI et supérieure PSS. Cela facilite le rapprochement (ou accostage) de la partie structurelle supérieure PSS par rapport à la partie structurelle inférieure PSI.

Par exemple, l'angle d'inclinaison peut être compris entre 1° et 45°. Ainsi, il peut, par exemple, être égal à 30°.

Dans ce cas, dans la seconde étape 30-40 on plaque la première pièce P1 de chaque paire (P1, P2) contre la face interne FI3 de la seconde pièce P2 de cette même paire avant de procéder à leur solidarisation fixe. Par exemple, dans la seconde étape 30-40 on peut réaliser ce plaquage avec des pinces de soudure avant de procéder à la solidarisation fixe par soudage. On notera que la réalisation de chaque plaquage contre une face interne FI3 d'une seconde pièce P2 peut être entièrement ou partiellement automatisée par l'utilisation d'au moins un robot, ou bien entièrement ou partiellement manuelle par l'intervention d'au moins un technicien.

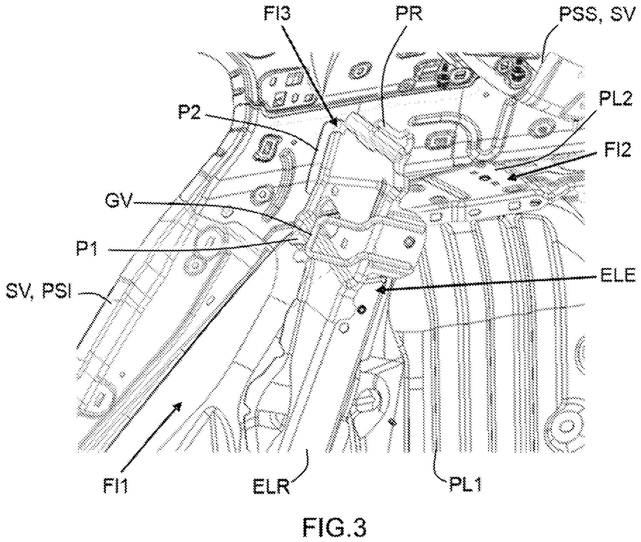

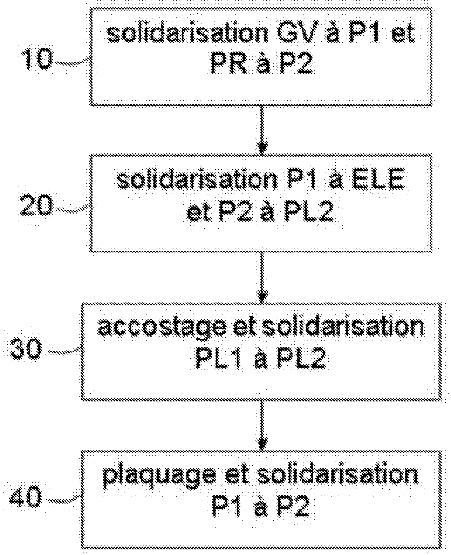

On notera également, comme illustré non limitativement sur la figure 3, que dans la seconde étape 30-40, après l'assemblage, chaque première pièce P1 peut recouvrir presque intégralement la seconde pièce P2 associée. Un tel recouvrement quasi intégral permet d'augmenter la solidité de la pièce de renfort double constituée par les première P1 et seconde P2 pièces, et donc de réduire notablement l'amplitude des torsions de la structure.

On a schématiquement représenté sur la figure 4 un exemple non limitatif d'algorithme mettant en oeuvre un procédé d'assemblage selon l'invention.

Dans une sous-étape 10 de la première étape 10-20, on solidarise fixement à chaque première pièce P1 une gâche GV destinée au verrouillage d'un dossier de siège arrière et à chaque seconde pièce P2 une pièce de renvoi PR d'une ceinture de sécurité.

Dans une sous-étape 20 de la première étape 10-20, on solidarise fixement à l'extrémité libre ELE de chaque élément latéral de renfort ELR une première pièce P1 et à la face interne FI2 de chacune des secondes parois latérales arrière PL2 une seconde pièce P2.

Dans une sous-étape 30 de la seconde étape 30-40, on rapproche (ou accoste) les parties structurelles inférieure PSI et supérieure PSS, puis on commence à assembler les parties structurelles inférieure PSI et supérieure PSS en solidarisant fixement par soudage leurs premières parois latérales arrière PL1 à leurs secondes parois latérales arrière PL2 correspondantes.

Dans une sous-étape 30 de la seconde étape 30-40, on plaque la première pièce P1 de chaque paire (P1, P2) contre la face interne FI3 de la seconde pièce P2 de cette même paire, puis on solidarise fixement par soudage chaque première pièce P1 à la seconde pièce P2 correspondante.

## Revendications

1. Procédé d'assemblage de parties structurelles inférieure (PSI) et supérieure (PSS) d'un véhicule automobile, ladite partie structurelle inférieure (PSI) comprenant deux premières parois latérales arrière (PL1) se faisant face, définissant respectivement deux passages de roue et sur des faces internes (FI1) desquelles sont solidarisés fixement deux éléments latéraux de renfort (ELR) comprenant chacun une extrémité libre (ELE), et ladite partie structurelle supérieure (PSS) comprenant deux secondes parois latérales arrière (PL2) se faisant face destinées à être solidarisées fixement et respectivement à des parties supérieures desdites premières parois latérales arrière (PL1), **caractérisé en ce qu'**il comprend i) une première étape (10-20) dans laquelle on solidarise fixement à ladite extrémité libre (ELE) de chaque élément latéral de renfort (ELR) une première pièce (P1) dédiée à l'ancrage d'une gâche (GV) de verrouillage d'un dossier de siège arrière, et à une face interne (FI2) de chacune desdites secondes parois latérales arrière (PL2) une seconde pièce (P2) dédiée à l'ancrage d'une pièce de renvoi (PR) d'une ceinture de sécurité, et ii) une seconde étape (30-40) dans laquelle on assemble lesdites parties structurelles inférieure (PSI) et supérieure (PSS) en solidarisant fixement par soudage lesdites premières pièces (P1) auxdites secondes pièces (P2) et lesdites premières parois latérales arrière (PL1) auxdites secondes parois latérales arrière (PL2).

2. Procédé selon la revendication 1, **caractérisé en ce que** l'on utilise deux paires de première (P1) et seconde (P2) pièces inclinées dans une même direction par rapport à une direction verticale dudit véhicule automobile et espacées l'une de l'autre, et **en ce que** dans ladite seconde étape (30-40) on plaque ladite première pièce (P1) de chaque paire contre ladite seconde pièce (P2) de cette même paire avant de procéder à leur solidarisation fixe.

3. Procédé selon la revendication 2, **caractérisé en ce que** dans ladite seconde étape (30-40) on réalise ledit plaquage avec des pinces de soudure avant de procéder à ladite solidarisation fixe par soudage.

4. Procédé selon l'une des revendications 1 à 3, **caractérisé en ce que** dans ladite seconde étape (30-40) après ledit assemblage chaque première pièce (P1) recouvre presque intégralement ladite seconde pièce (P2) associée.

5. Procédé selon l'une des revendications 1 à 4, **caractérisé en ce que** dans ladite première étape (10-20) on solidarise fixement à chaque première pièce (P1) une gâche (GV) destinée au verrouillage d'un dossier de siège arrière.

6. Procédé selon la revendication 5, **caractérisé en ce que** dans ladite première étape (10-20) on solidarise fixement par vissage ou soudage chaque gâche (GV) à chaque première pièce (P1).

7. Procédé selon l'une des revendications 1 à 6, **caractérisé en ce que** dans ladite première étape (10-20) on solidarise fixement à chaque seconde pièce (P2) une pièce de renvoi (PR) d'une ceinture de sécurité.

8. Procédé selon la revendication 7, **caractérisé en ce que** dans ladite première étape (10-20) on solidarise fixement par vissage ou soudage chaque pièce de renvoi (PR) à chaque seconde pièce (P2) associée.

9. Véhicule automobile comprenant une structure délimitant un habitacle dans lequel est installé au moins un siège arrière, **caractérisé en ce que** ladite structure comprend des parties structurelles inférieure (PSI) et supérieure (PSS) assemblées entre elles par la mise en oeuvre d'un procédé d'assemblage selon l'une des revendications précédentes.

## Patentansprüche

1. Verfahren zum Verbinden von unteren (PSI) und oberen (PSS) Strukturteilen eines Kraftfahrzeugs, wobei der untere Strukturteil (PSI) zwei einander zugewandte erste hintere Seitenwände (PL1) umfasst, die jeweils zwei Raddurchgänge definieren und an deren Innenflächen (FI1) zwei seitliche Verstärkungselemente (ELR) fest verbunden sind, die jeweils ein freies Ende aufweisen, und Oberer struktureller Teil (PSS) mit zwei einander gegenüberliegenden zweiten hinteren Seitenwänden (PL2), die fest und jeweils an oberen Abschnitten der ersten hinteren Seitenwände (PL1) befestigt werden sollen, **dadurch gekennzeichnet, dass** er i) einen ersten Schritt (10-20) umfasst, in dem mit dem freien Ende (ELE) jedes seitlichen Verstärkungselements (ELR) eine erste Verbindung verbunden ist Teil (P1) zur Verankerung eines Schließklinkenverschlusses (HGV) für eine Rückenlehne und einer Innenseite (FI2) jeder der zweiten Rückseitenwandungen (PL2) ein zweites Teil (P2) zur Verankerung eines Umlenkteils (PR) für einen Sicherheitsgurt und ii) ein zweiter Schritt (30-4) 0) in dem die unteren (PSI) und oberen (PSS) Strukturteile durch Verschweißen der ersten Teile (P1) mit den zweiten Teilen (P2) und der ersten hinteren Seitenwände (PL1) mit den zweiten hinteren Seitenwänden (PL2) verbunden sind.

2. Verfahren nach Anspruch 1, **dadurch gekennzeichnet, dass** zwei Paare erster (P1) und zweiter (P2) Teile verwendet werden, die in einer gleichen Richtung bezüglich einer vertikalen Richtung des Kraftfahrzeugs geneigt und voneinander beabstandet sind, und dass in dem zweiten Schritt (30-40) das erste Teil (P1) jedes Paares gegen das zweite Teil (P2) desselben Paares platziert wird vor ihrer festen Solidarität.

3. Verfahren nach Anspruch 2, **dadurch gekennzeichnet, dass** in dem zweiten Schritt (30-40) das Plattieren mit Schweißklemmen vor dem Durchführen der festen Verbindung durch Schweißen durchgeführt wird.

4. Verfahren nach einem der Ansprüche 1 bis 3, **dadurch gekennzeichnet, dass** in dem zweiten Schritt (30-40) nach dem Zusammenbau jedes erste Teils (P1) das zugeordnete zweite Teil (P2) nahezu vollständig bedeckt.

5. Verfahren nach einem der Ansprüche 1 bis 4, **dadurch gekennzeichnet, dass** in dem ersten Schritt (10-20) mit jedem ersten Teil (P1) ein Schließblech (HGV) zur Verriegelung einer Rückenlehne fest verbunden wird.

6. Verfahren nach Anspruch 5, **dadurch gekennzeichnet, dass** in dem ersten Schritt (10-20) jeder Schließer (HGV) mit jedem ersten Teil (P1) fest verschraubt oder verschweißt wird.

7. Verfahren nach einem der Ansprüche 1 bis 6, **dadurch gekennzeichnet, dass** in dem ersten Schritt (10-20) mit jedem zweiten Teil (P2) ein Umlenkteil (PR) eines Sicherheitsgurtes fest verbunden wird.

8. Verfahren nach Anspruch 7, **dadurch gekennzeichnet, dass** in dem ersten Schritt (10-20) jedes Umlenkteil (PR) mit jedem zugeordneten zweiten Teil (P2) durch Verschrauben oder Schweißen fest verbunden wird.

9. Kraftfahrzeug mit einer Struktur, die einen Fahrgastraum begrenzt, in dem mindestens ein Rücksitz installiert ist, **dadurch gekennzeichnet, dass** die Struktur untere (PSI) und obere (PSS) Strukturteile umfasst, die durch die Durchführung eines Montageverfahrens nach einem der vorhergehenden Ansprüche miteinander verbunden sind.

## Claims

1. Assembly process of lower structural parts (PSI) and upper structural parts (PSS) of a motor vehicle, the lower structural part (PSI) consisting of two front side walls (PL1) facing each other, defining two wheel passages and on internal faces (FI1), of which two reinforcement side elements (ELR), each of which has a free end (ELE), and the said upper structural part (PSS) having two seconds Rear side walls (PL2) facing intended to be joined together fixed and respectively to the upper parts of the said first rear side walls (PL1), **characterized in that** it includes (i) a first step (10-20) in which one attaches to the said free end (ELE) of each side reinforcement element (ELR) a first part (P1) dedicated to the anchoring of a gasket (GV) locking a rear seat back, and an inner side (FI2) of each of the second rear side walls (PL2), a second part (P2) dedicated to the anchoring of a seat belt reference part (PR), and ii) a second stage (30-40) in which the said lower and upper structural parts (PSI) and PSS are assembled together by welding the said first parts (P1) to the said second parts (P2) and the said first rear side walls (PL1) to the said second rear side walls (PL2).

2. Process according to Claim 1, **characterized by** the use of two pairs of first (P1) and second (P2) parts inclined in the same direction in relation to one vertical direction of the said motor vehicle and spaced apart in that second stage (30-40), the said first part (P1) of each pair is placed against the said second part (P2) of the same pair before proceeding with their fixed solidarity.

3. Process according to Claim 2, **characterized in that** in the second stage (30-40) the said weld claws are made before making the said fixed welding joint.

4. Process according to one of the claims 1 to 3, **characterized in that** in the second stage (30-40) after the said assembly each first part (P1) covers almost entirely the second part (P2) associated.

5. Process according to one of the claims 1 to 4, **characterized in that** in the first stage (10-20), a coddle (GV) for the locking of a rear seat back is attached to each first part (P1).

6. Process according to Claim 5, **characterized in that** in the said first stage (10-20) each gasket (GV) is fastened by screw or welding to each first piece (P1).

7. Process according to one of the claims 1 to 6, **characterized in that** in the said first stage (10-20) one reference part (PR) of a seat belt is attached to each second part (P2).

8. Process according to Claim 7, **characterized in that** in the said first stage (10-20) each reference part (PR) is connected by screw or welding to each associated second part (P2).

9. A motor vehicle comprising a structure defining an interior in which at least one rear seat is installed, **characterized by** that structure comprising lower structural parts (PSI) and higher (PSS) assembled between them by the implementation of an assembly process according to one of the preceding claims.
